# EUROPÄISCHE PATENTSCHRIFT

(11) **EP 0 682 399 B1**
(45) Veröffentlichungstag und Bekanntmachung des Hinweises auf die Patenterteilung: **29.10.1997**
(21) Anmeldenummer: 95810266.7
(22) Anmeldetag: 21.04.1995
(51) Int. Cl.: H02K 9/04, F04D 29/54

(54) **Elektrische Maschine mit einem Axialventilator**
Electrical machine with an axial fan
Machine électrique avec un ventilateur axial

(30) Priorität: 09.05.1994 DE 4416299
(43) Veröffentlichungstag der Anmeldung: 15.11.1995
(73) Patentinhaber: Asea Brown Boveri AG, 5401 Baden (CH)
(72) Erfinder: Baer, Jürgen, CH-5506 Mägenwil (CH); Zimmermann, Hans, CH-8617 Mönchaltorf (CH)

(56) Entgegenhaltungen:
- US-A- 2 538 739
- PATENT ABSTRACTS OF JAPAN, unexamined applications, M Field, Band 13, Nr. 122, 27. März 1989 THE PATENT OFFICE JAPANESE GOVERNMENT Seite 115 M 807; & JP-A-63 295 900 (HITACHI LTD.)
- B. ECK, "Technische Strömungslehre", SPRINGER-VERLAG 1966 * Seiten 186-188; Fig. 177 *
- PATENT ABSTRACTS OF JAPAN, unexamined applications, M Field, Band 13, Nr. 289, 27. März 1989 THE PATENT OFFICE JAPANESE GOVERNMENT page 99 M 845; & JP-A-01 083 894 (HITACHI LTD.)

## Beschreibung

### TECHNISCHES GEBIET

Die Erfindung bezieht sich auf eine elektrische Maschine mit einem Axialventilator an einem Wellenende, einem Rotor und einem von einem Maschinengehäuse umgebenen Statorkörper, der mit einer Statorwicklung versehen ist, die an beiden Statorkörperstirnseiten Wickelköpfe aufweisen, mit einem Einströmraum des Axialventilators, gebildet im wesentlichen durch die Stirnwand des Maschinengehäuses und eine Trennwand zwischen dem Wickelkopf und besagter Stirnwand, einem Ausströmraum des Axialventilators, von wo aus das vom Axialventilator geförderte Kühlgas dem Rotor und dem Statorkörper und der Statorwicklung zugeführt wird.

Die Erfindung nimmt dabei Bezug auf einen Stand der Technik, wie er sich beispielsweise aus der EP-A-0 279 064 bzw. der inhaltsgleichen US-A-4,876,470 ergibt.

### TECHNOLOGISCHER HINTERGRUND UND STAND DER TECHNIK

Mit steigender Materialausnutzung werden bei rotierenden elektrischen Maschinen die Anforderungen an die Kühlung immer höher. Dies gilt insbesondere für gasgekühlte Turbogeneratoren und in noch bedeutenderem Masse für Turbogeneratoren mit indirekt gekühlter Statorwicklung. Bei diesen Maschinentypen muss die in der Statorwicklung erzeugte Verlustwärme durch die Wicklungsisolation in den gekühlten Statorblechkörper abgeleitet werden.

Die Druckerzeugung bei gasgekühlten Turbogeneratoren erfolgt regelmässig mit Axialventilatoren. Um die Druckerhöhung zu verbessern scheiden mehrstufige Verdichter aus Platzgründen aus. Auch wurde bislang aufgrund der Einbauverhältnisse sowie Montagemöglichkeiten darauf verzichtet, Vor- oder Nachleitapparate einzubauen.

### KURZE DARSTELLUNG DER ERFINDUNG

Ausgehend vom Stand der Technik liegt der Erfindung die Aufgabe zugrunde, in einfacher und wirtschaftlicher Weise die Kühlwirkung zu erhöhen, ohne den Wirkungsgrad der Maschine zu erniedrigen.

Diese Aufgabe wird erfindungsgemäss dadurch gelöst, dass im Ausströmraum des Axialventilators eine koaxial zur Rotorwelle angeordnete Gasleiteinrichtung vorgesehen ist, welche Gasleiteinrichtung eine Mehrzahl kegelmantelförmiger und voneinander radial distanzierter Leitringe und ein gleichfalls kegelmantelförmiges Ringteil umfasst, die unter sich und mit dem Maschinengehäuse direkt oder mittelbar mittels im wesentlichen radial verlaufenden Stäben oder Leitblechen verbunden sind, dass jeweils zwischen radial benachbarten Leitringen in Strömungsrichtung des Kühlgases sich stetig erweiternde Ringkanäle ausgebildet sind.

Die Wirkung dieser Gasleiteinrichtung im Wickelkopfraum kann verglichen werden mit derjenigen sogenannter Austrittsdiffusoren, die aus unterteilten, ringförmigen Leitschaufeln bestehen, und vor Jahren beim Auslauf von grossen Windkanälen verwendet wurden (vgl. Buch von Bruno Eck, "Technische Strömungslehre" Springer-Verlag Berlin/Heidelberg/New York, 1966, Seite 186 und 187, insbesondere Abb. 176 auf Seite 187. Sie bewirkt eine deutliche Druckerhöhung im Wickelkopfraum, was zur Folge hat, dass die Kühlkanäle im Rotor und Stator mit mehr Kühlgas pro Zeiteinheit durchströmt werden.

Darüber hinaus wird der dynamische Druck am Austritt des Axialventilators verringert, d.h. der Austrittsverlust sinkt. Bei gleichem Ventilator lassen sich auf diese Weise zwischen 15 % und 25 % des Druckverlustes in der Maschine durch Druckumsetzung vermeiden.

Die Erfindung sowie weitere damit erzielbare Vorteile werden nachstehend anhand eines in der Zeichnung dargestellten Ausführungsbeispieles näher erläutert.

### KURZE BESCHREIBUNG DER ZEICHNUNGEN

In den Zeichnungen sind Ausführungsbeispiele der Erfindung schematisch dargestellt, und zwar zeigen:
- Fig. 1: einen vereinfachten Längsschnitt durch eine Endpartie eines Turbogenerators mit einem Axialventilator und zugehöriger Gasleiteinrichtung,
- Fig. 2: eine Draufsicht auf die dem Axialventilator zugeordnete Gasleiteinrichtung,
- Fig. 3: einen teilweisen Radialschnitt durch die Gasleiteinrichtung an der horizontalen Trennstelle,
- Fig. 4: einen Schnitt durch die Trennstelle gemäss Fig. 3 längs deren Linie A-A und
- Fig. 5: eine vereinfachte Darstellung 2er unterschiedlich ausgebildeter Leitbleche in Ringkanälen der Gasleiteinrichtung gemäss Fig. 1.

### WEGE ZUR AUSFÜHRUNG DER ERFINDUNG

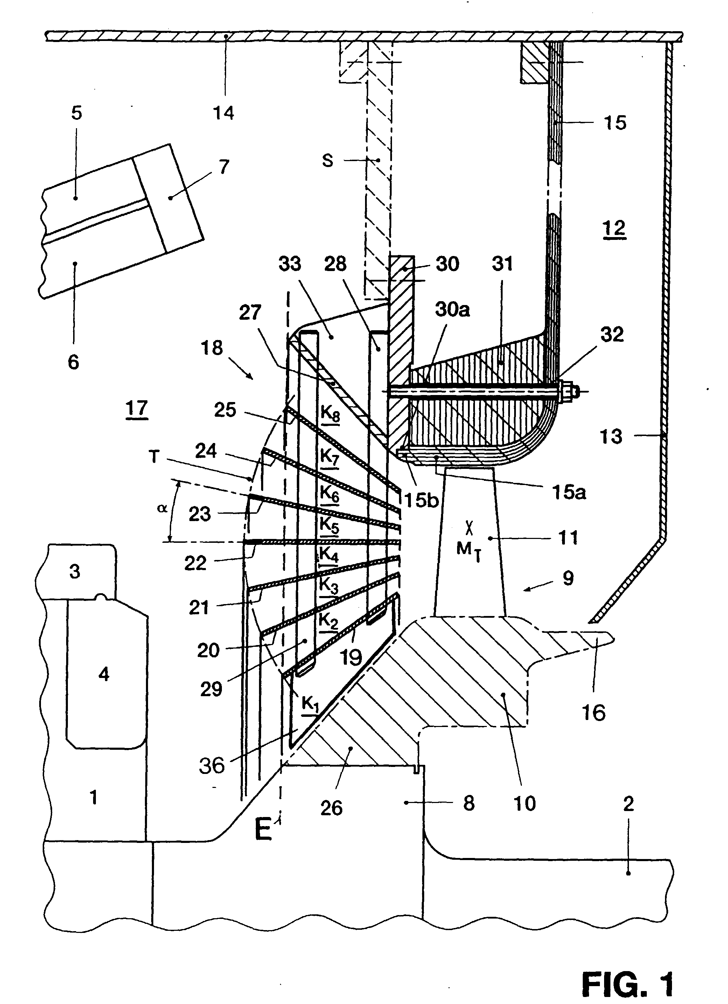

Im vereinfachten Längsschnitt durch die nicht-antriebsseitige Endpartie (NS-Seite oder Erregerseite) - eines Turbogenerators gemäss Fig. 1 ist mit der Bezugsziffer 1 ein Rotor, mit 2 dessen Welle, mit 3 die Rotorkappe und mit 4 dessen Kappenplatte bezeichnet. Die Statorwicklung, von der nur die Stirnbügel sichtbar sind, weist einen Unterstab 5 und einen Oberstab 6 auf, die mittels Ösen 7 elektrisch und mechanisch verbunden sind. Die Gesamtheit aller Stirnbügel bildet den Wickelkopf.

Auf einem Wellenbund 8 der Rotorwelle 2 ist ein Axialventilator 9 befestigt. Seine Nabe ist mit 10, seine Laufschaufeln mit 11 bezeichnet. Sein Einströmraum 12 ist gebildet durch die Stirnseite 13 des Maschinengehäuses 14 und eine Trennwand 15 aus glasfaserverstärktem Kunststoff oder einem anderen Werkstoff. Diese Trennwand 15 (Ventilatorverschalung) ist radial aussen lösbar am Maschinengehäuse 14 befestigt, verläuft radial nach innen, biegt dann in axialer Richtung ab und reicht axial bis hinter den Axialventilator 9. Die Abdichtung des Einströmraums 12 gegenüber der Aussenwelt erfolgt durch einen axial weisenden Ringwulst 16 an der Ventilatornabe 10. Insoweit entspricht der Aufbau der Endpartie der elektrischen Maschine dem Stand der Technik.

Zur Druckerhöhung ist erfindungsgemäss im Ausströmraum 17 (Wickelkopfraum) des Axialventilators 9 eine generell mit der Bezugsziffer 18 bezeichnete Gasleiteinrichtung vorgesehen. Sie ist koaxial zur Rotorwelle 2 angeordnet und weist eine Mehrzahl - im Beispielsfall 7 kegelmantelförmige und voneinander radial distanzierte Leitringe 19 bis 25 auf, wobei der mittlere Leitring 22 zylindrisch (= Grenzfall von kegelförmig) ist. Bei einer geraden Anzahl von Leitringen und der Geometrie der Fig. 1 wären auch die beiden mittleren Leitringe kegelmantelförmig. Teil der Leiteinrichtung ist auch das sich konisch zur Maschinenmitte hin verjüngende Nabenende 26 der Ventilatornabe 10 sowie ein sich praktisch nahtlos an das innere Ende 15a der Trennwand 15 anschliessendes kegelmantelförmiges Ringteil 27. Der Austrittsbereich des Axialventilators 9 wird auf diese Weise in eine Mehrzahl von sich in Strömungsrichtung des Kühlgases stetig erweiternden Ringkanälen K₁, ..., K₈ mit einem Öffnungswinkel α, mit vorzugsweise α ≤ 12°, aufteilt, die jeweils für sich gesehen einen Diffusor, in ihrer Gesamtheit einen "Multidiffusor" bilden. Um dabei annähernd gleiche Kanallängen zu erreichen, sind die axialen Längen - genauer die Länge der Mantellinien - der kegelmantelförmigen Ringteile 19 bis 25 so gewählt, dass ihre inneren Enden annähernd auf einer gedachten Torusteilfläche T liegen. Die Erzeugende dieses Torus ist dabei ein Kreis, dessen Mittelpunkt M_{T} selbst auf einem zur Rotorwelle 2 koaxialen Kreis liegt, der in etwa durch die radiale Mitte der Laufschaufeln 11 geht. Sofern es die Einbauverhältnisse nicht erlauben, können die wickelkopfseitigen Enden der Leitringe 19,...,25 auch in einer radialen Ebene E (strichliert in Fig. 1 eingezeichnet) enden.

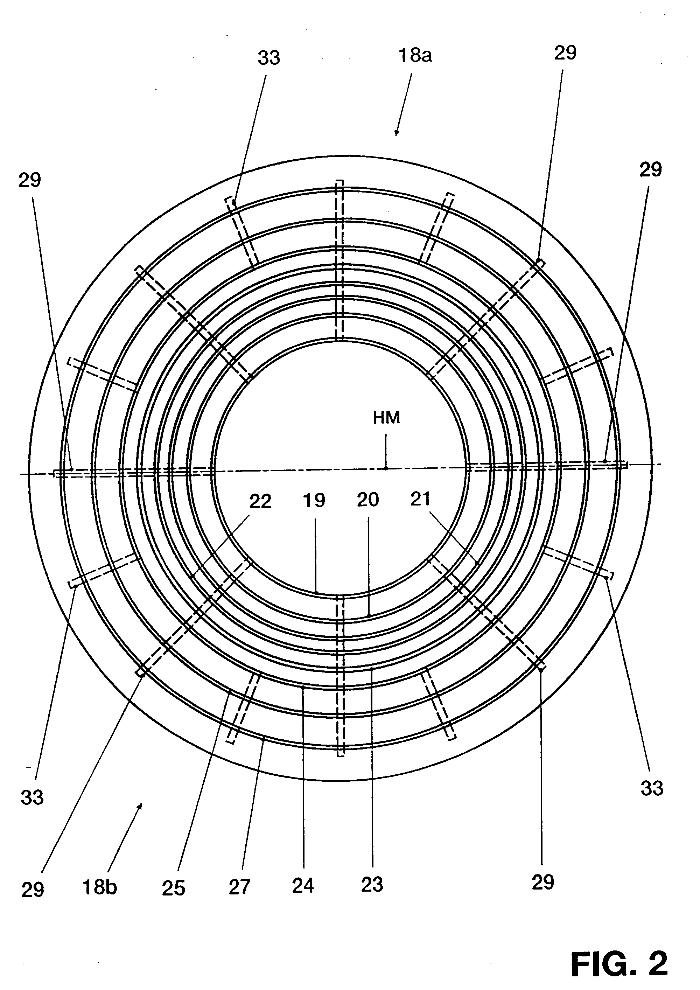

Die einzelnen Leitringe 19 - 25 und der Ringteil 27 sind unter sich durch im wesentlichen radial verlaufender Stäbe 28 und 29 mit kreisrundem oder ovalem Querschnitt verbunden, welche die Leitringe 19 - 25 und auch das Ringteil 27 durchsetzen. Die gleichmässige Verteilung der Stäbe in Umfangsrichtung ist aus der Draufsicht gemäss Fig. 2 zu erkennen. Die Leitringe 19 - 25 und auch das Ringteil 27 sowie die Stäbe 28 und 29 bestehen aus unmagnetischem Material, vorzugsweise einer Aluminiumlegierung. Die Verbindung der einzelnen Teile untereinander erfolgt dann vorzugsweise durch Schweissen. Die Leitringe 19 - 25 können ebenso wie die Stäbe 28, 29 auch aus glasfaserverstärktem Kunststoff bestehen. Dann kommt vorzugsweise Kleben als Verbindungstechnik in Frage.

Alternativ oder zusätzlich dazu können die Leitringe 19 - 25 durch Leitbleche 36 distanziert und/oder verbunden werden, die sich über einen Teil oder über die ganze Länge der Ringkanäle K1 - K8 erstrecken. Der Übersichlichkeit halber ist in Fig. 1 nur ein Leitblech im Ringkanal K1 dargestellt.

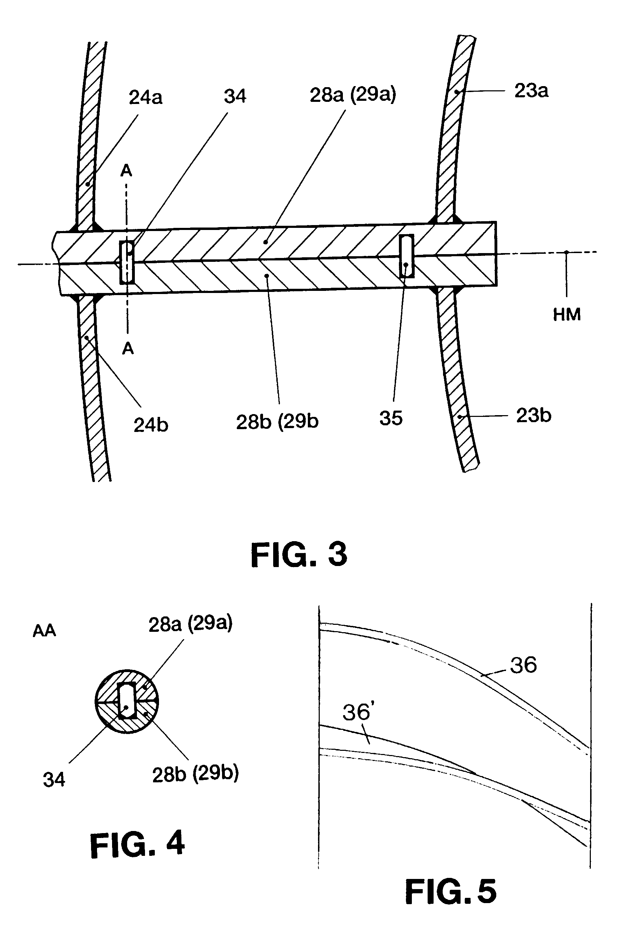

Die Leitbleche können z. B. ein Kreisbogenprofil, vgl. das Leitblech 36 in Fig. 5, oder ein verwundenes Profil, vgl. das Leitblech 36' in Fig. 5, aufweisen. Die Anzahl der Leitbleche 36, 36' ist frei wählbar, abhängig von ihrer Wirkung, d. h., von ihrer Formgebung; sie kann grösser oder kleiner als die Anzahl der Laufschaufeln 11 an der Ventilatornabe 10 sein. Durch die Leitbleche 36, 36' lässt sich die Druckumsetzung in der Gasleiteinrichtung 18 verbessern.

Die Gasleiteinrichtung 18 ist von einer Ringplatte 30 gehalten, die unter Zwischenschaltung von Füllstücken 31 mittels Schraubbolzen 32 an der Trennwand 15 befestigt ist. Dabei sind die axial äusseren Stäbe 28 und/oder die Leitbleche 36, 36' mit der Ringplatte 30 verschweisst. Zur Versteifung sind ferner dreickförmige Platten 33 zwischen die Ringplatte 30 und den Ringteil 27 eingeschweisst. Sofern es die Einbauverhältnisse zulassen, kann die Halterung der Gasleiteinrichtung 18 auch an einer separaten Konstruktion erfolgen, z.B. an radial nach innen weisenden Streben S, die von der Wandung des Gehäuses 14 bis zur Ringplatte 30 reichen (in Fig. 1 strichliert dargestellt).

Zur Zentrierung der Gasleiteinrichtung 18 gegenüber dem inneren Ende 15a der Trennwand 15 weist diese eine Schulter 15b am Aussenumfang auf, die mit einer Eindrehung 30a am Innenumfang der Ringplatte 30 korrespondiert.

Um die Gasleiteinrichtung 18 in die Maschine einbauen zu können - sie lässt sich aus konstruktiven und funktionellen Gründen nicht als Ganzes über den Axialventilator 9 stülpen, ist diese mehrteilig, vorzugsweise, wie im Beispielsfall, zweiteilig ausgebildet; die beiden Hälften sind mit 18a und 18b bezeichnet. Die Trennflächen liegen etwa in der horizontalen Symmetrieebene HM (Fig. 2) der Maschine. Die Trennflächen verlaufen dabei durch die beiden horizontal verlaufenden Stabpaare 28 und 29, von denen in Fig. 2 nur das Stabpaar 29 sichtbar ist. Die Stäbe sind dort in Stablängsrichtung geteilt, und die Stabhälften mit halbkreisförmigem Querschnitt mit 28a und 28b bzw. 29a und 29b bezeichnet.

Entsprechend sind alle Leitringe 19 - 25, der Ringteil 27 und auch die Ringplatte 30 zweiteilig ausgeführt mit Trennflächen längs der horizontalen Symmetrieebene HM. In Fig. 3 sind dabei lediglich zwei benachbarte Leitringe 28, 29 sichtbar, deren Hälften mit 23a und 23b bzw. 24a und 24b bezeichnet sind. Diese sind mit den Stabhälften 28a, 28b verschweisst. Passstifte 34, 35, die in beide Stabhälften 28a und 28b eingreifen, sichern die gegenseitige Lage der beiden Hälften 18a, 18b der Gasleiteinrichtung. Der Zusammenhalt beider Hälften 18a und 18b ist an sich durch die Schraubbolzen 32 (Fig. 1) gewährleistet. Es können jedoch anstelle von Passstiften auch die beiden Hälften 18a und 18b durch Verschrauben der Stabhälften 28a, 28b und 29a und 29b zusammengespannt werden. Diese Verschraubung kann jedoch aus Platzgründen nur an den äusseren Enden der Stabhälften erfolgen.

Durch den beschriebenen zweiteiligen Aufbau der Gasleiteinrichtung 18 lässt sich diese einfach montieren: Bei entfernter Trennwand 15 lassen sich die beiden Hälften 18a und 18b hinter den Axialventilator 9 absenken, dort provisorisch sichern und schliesslich an der Trennwand 15 definitiv befestigen, wobei das Zusammenwirken des Bundes 15b am inneren Ende 15a der Trennwand 15 mit der Eindrehung 30a der Ringplatte 30 die exakte Zentrierung der Gasleiteinrichtung 18 sicherstellt.

Durch die Druckumsetzung in der Gasleiteinrichtung 18 und die Reduktion der Austrittsverluste nach dieser gegenüber dem bislang üblichen Axialradaustritt lassen sich zwischen 15 % und 25 % der Druckverluste in der Maschine einsparen und damit die Kühlwirkung drastisch erhöhen.

Die Erfindung wurde im vorstehenden anhand eines gasgekühlten Turbogenerators verdeutlicht. Sie ist jedoch nicht auf solche Maschinentypen beschränkt. Sie eignet sich bei allen elektrischen Maschinen mit Axialventilatoren, sofern es die konstruktiven Gegebenheit und die Platzverhältnisse zulassen, eine derartige Gasleiteinrichtung einzubauen. Auch der nachträgliche Einbau einer solchen Gasleiteinrichtung, z.B. im Rahmen eines Retrofit-Vorhabens, kann unter Umständen in Frage kommen, da keine wesentlichen Eingriffe in die Maschinenkonstruktion erforderlich sind. Änderungen sind im Grunde genommen nur an der Ventilatornabe 10 und bezüglich der Auslegung der ohnehin vorhandenen Trennwand 15 als Träger für die Gasleiteinrichtung 18 erforderlich.

### Bezeichnungsliste

- 1: Rotor
- 2: Rotorwelle
- 3: Rotorkappe
- 4: Kappenplatte
- 5: Unterstab, Statorwicklung
- 6: Oberstab, Statorwicklung
- 7: Ösen
- 8: Wellenbund an 2
- 9: Axialventilator
- 10: Nabe von 9
- 11: Laufschaufeln von 9
- 12: Einströmraum von 9
- 13: Stirnseite von 14
- 14: Maschinengehäuse
- 15: Trennwand
- 16: Ringwulst
- 15a: inneres Ende von 15
- 15b: Schulter an 15a
- 17: Ausströmraum von 9 (Wickelkopfraum)
- 18: Gasleiteinrichtung
- 18a,18b: Hälften von 18
- 19-25: kegelmantelförmige Leitringe
- 23a,23b: Hälften von 23
- 24a,24b: Hälften von 24
- 26: konisches Ende von 10
- 27: Ringteil
- 28,29: Stäbe
- 30: Ringplatte
- 30a: Eindrehung an 30
- 31: Füllstücke
- 32: Schraubbolzen
- 33: dreieckförmige Verstärkungsplatten
- 34,35: Passstifte
- 36, 36': Leitbleche

- α: Öffnungswinkel der Leitringe
- E: radiale Ebene
- HM: horizontale Symmetrieebene = Trennebene von 18
- K₁...K₈: Ringkanäle
- M_{T}: Mittelpunkt der Erzeugenden von T
- S: Streben
- T: Torusteilfläche

## Patentansprüche

1. Gasgekühlte elektrische Maschine mit einem Axialventilator (9) an einem Wellenende, einem Rotor (1) und einem von einem Maschinengehäuse (14) umgebenen Statorkörper, der mit einer Statorwicklung (5, 6) versehen ist, die an beiden Statorkörperstirnseiten Wickelköpfe aufweist, mit einem Einströmraum (12) des Axialventilators (9), gebildet im wesentlichen durch die Stirnwand (13) des Maschinengehäuses (14) und eine Trennwand (15) zwischen dem Wickelkopf und besagter Stirnwand (13), einem Ausströmraum (17) des Axialventilators (9), von wo aus das vom Axialventilator geförderte Kühlgas dem Rotor und dem Statorkörper und der Statorwicklung zugeführt wird, dadurch gekennzeichnet, dass im Ausströmraum (17) des Axialventilators eine koaxial zur Rotorwelle (2) angeordnete Gasleiteinrichtung (18) vorgesehen ist, welche Gasleiteinrichtung eine Mehrzahl kegelmantelförmiger und voneinander radial distanzierter Leitringe (19 - 25) und ein gleichfalls kegelmantelförmiges Ringteil (27) umfasst, die unter sich und mit dem Maschinengehäuse (14) direkt oder mittelbar mittels im wesentlichen radial verlaufenden Stäben (28, 29) und/oder Leitblechen (36, 36') verbunden sind, und dass jeweils zwischen radial benachbarten Leitringen in Strömungsrichtung des Kühlgases sich stetig erweiternde Ringkanäle (K₂, ..., K₈) ausgebildet sind.

2. Elektrische Maschine nach Anspruch 1, dadurch gekennzeichnet, dass sich die Nabe (10) des Axialventilators (9) konisch zum Maschineninneren hin verjüngt, derart, dass sich zwischen ihr und dem ihr unmittelbar benachbarten Leitring (19) ein in Strömungsrichtung des Kühlgases sich stetig erweiternder Ringkanal (K₁) ausbildet.

3. Elektrische Maschine nach Anspruch 1 oder 2, dadurch gekennzeichnet, dass die Leiteinrichtung (18) an einer Ringplatte (30) befestigt ist, die ihrerseits mit der Trennwand (15) lösbar verbunden ist.

4. Elektrische Maschine nach einem der Ansprüche 1 bis 3, dadurch gekennzeichnet, dass die Länge der Mantellinien der kegelmantelförmigen Ringteile (19,...,25) so gewählt ist, dass ihre inneren Enden annähernd auf einer gedachten Torusteilfläche (T) liegen, wobei die Erzeugende dieses Torus ein Kreis ist, dessen Mittelpunkt (M_{T}) auf einem zur Rotorwelle (2) koaxialen Kreis liegt, der in etwa durch die radiale Mitte der Laufschaufeln (11) des Axialventilators (9) geht.

5. Elektrische Maschine nach einem der Ansprüche 1 bis 4, dadurch gekennzeichnet, dass der Öffnungswinkel (α) der Ringkanäle kleiner oder gleich 12° beträgt.

6. Elektrische Maschine nach einem der Ansprüche 1 bis 5 dadurch gekennzeichnet, dass die Gasleiteinrichtung (18) zweiteilig ausgeführt ist und aus zwei lösbar miteinander verbundenen Hälften (18a,18b) besteht, deren Trennflächen annähernd in der horizontalen Mittelebene (HM) der Maschine verlaufen.

7. Elektrische Maschine nach einem der vorhergehenden Ansprüche, dadurch gekennzeichnet, dass die Leitbleche (36) ein Kreisprofil aufweisen.

8. Elektrische Maschine nach einem der Ansprüche 1 bis 6, dadurch gekennzeichnet, dass die Leitbleche (36') ein verwundenes Profil aufweisen.

## Claims

1. Gas-cooled electrical machine with an axial fan (9) at one shaft end, with a rotor (1) and a stator body which is surrounded by a machine housing (14) and which is provided with a stator winding (5, 6) having winding heads on the two end faces of the stator body, with an inflow space (12) of the axial fan (9), formed essentially by the end wall (13) of the machine housing (14) and by a partition wall (15) between the winding head and said end wall (13), and with an outflow space (17) of the axial fan (9), out of which the cooling gas conveyed by the axial fan is fed to the rotor and to the stator body and stator winding, wherein there is provided in the outflow space (17) of the axial fan a gas-guide device (18) which is arranged coaxially relative to the rotor shaft (2) and which comprises a plurality of guide rings (19-25) in the form of a cone envelope and spaced radially from one another and a ring part (27) likewise in the form of a cone envelope, which are connected to one another and to the machine housing (14) directly or indirectly by means of bars (28, 29) and/or guiding plates (36, 36') extending essentially radially, and in. that ring channels (K2, ..., K8) widening continuously in the direction of flow of the cooling gas are formed in each case between radially adjacent guide rings.

2. Electrical machine according to Claim 1, characterized in that the hub (10) of the axial fan (9) narrows conically towards the machine interior, in such a way that a ring channel (K1) widening continuously in the direction of flow of the cooling gas is formed between said hub (10) and the guide ring (19) directly adjacent to it.

3. Electrical machine according to Claim 1 or 2, characterized in that the guide device (18) is fastened to an annular plate (30) which is itself connected releasably to the partition wall (15).

4. Electrical machine according to one of Claims 1 to 3, characterized in that the length of the generatrices of the ring parts (19, ..., 25) in the form of a cone envelope is selected in such a way that their inner ends are located approximately on an imaginary torus reference surface (T), the generatrix of this torus being a circle, the centre point (MT) of which is located on a circle which is coaxial relative to the rotor shaft (2) and which passes approximately through the radial centre of the moving blades (11) of the axial fan (9).

5. Electrical machine according to one of Claims 1 to 4, characterized in that the aperture angle (a) of the ring channels is smaller than or equal to 12°.

6. Electrical machine according to one of Claims 1 to 5, characterized in that the gas-guide device (18) is made two-part and consists of two halves (18a, 18b) which are connected releasably to one another and the separating faces of which extend approximately in the horizontal mid-plane (HM) of the machine.

7. Electrical machine according to one of the preceding claims, characterized in that the guiding plates (36) have a circular profile.

8. Electrical machine according to one of Claims 1 to 6, characterized in that the guiding plates (36') have a twisted profile.

## Revendications

1. Machine électrique refroidie par du gaz avec un ventilateur axial (9) à une extrémité de l'arbre, un rotor (1) et un corps du stator entouré d'un carter de machine (14), pourvu d'un enroulement de stator (5, 6) qui présente des têtes d'enroulement aux deux extrémités frontales du corps du stator, avec un espace d'aspiration (12) du ventilateur axial (9) formé pour l'essentiel par une paroi frontale (13) du carter de la machine (14) et par une paroi de séparation (15) entre la tête de l'enroulement et ladite paroi frontale (13), avec un espace d'évacuation (17) du ventilateur axial (9) à partir duquel le gaz de refroidissement produit par le ventilateur axial est acheminé vers le rotor, vers le corps du stator et vers l'enroulement du stator, caractérisée en ce qu'il est prévu un dispositif coaxial de guidage du gaz (18), disposé sur l'arbre du rotor (2), dans l'espace d'évacuation (17) du ventilateur axial, ce dispositif de guidage du gaz comportant une pluralité d'anneaux de guidage (19 - 25) en forme de surface conique et mutuellement espacés radialement, et une pièce annulaire (27) également en forme de surface conique qui sont reliés entre eux et avec le carter de la machine (14), directement ou au moyen de barres (28, 29) et/ou de tôles de guidage (36, 36') de direction essentiellement radiale, et en ce qu'entre chacun des anneaux de guidage radialement voisins sont formés des canaux annulaires (K₂, ..., K₈) s'élargissant régulièrement dans le sens du flux du gaz de refroidissement.

2. Machine électrique selon la revendication 1, caractérisée en ce que le moyeu (10) du ventilateur axial (9) se rétrécit en forme de cône par rapport à l'intérieur de la machine de sorte qu'entre lui et l'anneau de guidage (19) immédiatement voisin se forme un canal annulaire (K₁) s'élargissant régulièrement dans le sens du flux du gaz de refroidissement.

3. Machine électrique selon la revendication 1 ou 2, caractérisée en ce que le dispositif de guidage (18) est fixé à une plaque annulaire (30) qui à son tour est reliée de manière démontable à la paroi de séparation (15).

4. Machine électrique selon l'une des revendications 1 à 3, caractérisée en ce que la longueur des lignes du manteau des pièces annulaires (19, ...,25) en forme de surface conique est choisie de telle sorte que leurs extrémités internes reposent approximativement sur la surface imaginaire partielle d'un tore (T) dont la génératrice de ce tore est un cercle dont le centre (M_{T}) se trouve sur un cercle coaxial avec l'arbre du rotor (2) passant approximativement par le milieu radial des pales (11) du ventilateur axial (9).

5. Machine électrique selon l'une des revendications 1 à 4, caractérisée en ce que l'angle d'ouverture (a) des canaux annulaires est inférieur ou égal à 12°.

6. Machine électrique selon l'une des revendications 1 à 5, caractérisée en ce que le dispositif de guidage du gaz (18) est réalisé en deux parties et est constitué de deux moitiés (18a, 18b) reliées l'une à l'autre de manière démontable dont les surfaces de séparation passent approximativement dans le plan médian horizontal (HM) de la machine.

7. Machine électrique selon l'une des revendications précédentes, caractérisée en ce que les tôles de guidage (36) présentent un profil circulaire.

8. Machine électrique selon l'une des revendications 1 à 6, caractérisée en ce que les tôles de guidage (36') présentent un profil gauche.
